# EUROPÄISCHE PATENTSCHRIFT

(11) **EP 3 582 920 B1**
(45) Veröffentlichungstag und Bekanntmachung des Hinweises auf die Patenterteilung: **10.08.2022**
(21) Anmeldenummer: 18702964.0
(22) Anmeldetag: 30.01.2018
(51) Int. Cl.: B23D 61/18, B23D 57/00, B28D 5/04

(54) **DRAHTSÄGE UND VERFAHREN ZUM GLEICHZEITIGEN ABTRENNEN EINER VIELZAHL VON SCHEIBEN VON EINEM STAB**
WIRE SAW AND METHOD FOR SIMULTANEOUSLY SEPARATING A PLURALITY OF DISCS FROM A ROD
SCIE À FIL ET PROCÉDÉ POUR DÉCOUPER SIMULTANÉMENT UNE PLURALITÉ DE DISQUES D'UNE TIGE

(30) Priorität: 14.02.2017 DE 102017202314
(43) Veröffentlichungstag der Anmeldung: 25.12.2019
(73) Patentinhaber: Siltronic AG, 81677 München (DE)
(72) Erfinder: PIETSCH, Georg, 84489 Burghausen (DE)
(74) Vertreter: Killinger, Andreas
(86) Internationale Anmeldenummer: PCT/EP2018/052207
(87) Internationale Veröffentlichungsnummer: WO 2018/149631

(56) Entgegenhaltungen:
- CN-B- 103 692 567
- DE-A1-102007 019 566

## Beschreibung

Gegenstand der Erfindung ist ein Verfahren nach dem Oberbegriff des Anspruchs 1 und eine Drahtsäge nach dem Oberbegriff des Anspruchs 9.

Eine Vorrichtung zum Trennläppen eines Stabs in eine Vielzahl von Scheiben gleichzeitig umfasst Draht, mehrere Drahtführungsrollen und eine Vorrichtung zum Bewegen des Stabs. Die Drahtführungsrollen haben jeweils die Form eines geraden Kreiszylinders und besitzen jeweils eine Achse, um die sie drehbar gelagert sind, und eine Zylindermantelfläche, die mit einer Vielzahl jeweils geschlossener und in Ebenen senkrecht zur Achse verlaufender Rillen in Abständen zueinander versehen sind. Der Draht wird in den Rillen spiralförmig so um die Drahtführungsrollen herumgeführt, dass zwischen zwei Drahtführungsrollen ein Gatter aus parallel zueinander und in einer Ebene verlaufenden Abschnitten des Drahts aufgespannt wird.

Ein Verfahren zum Trennläppen eines Stabs in eine Vielzahl von Scheiben gleichzeitig in der beschriebenen Vorrichtung umfasst ein gleichsinniges Drehen der Drahtführungsrollen um ihre Achsen und ein Zustellen des Stabs mittels der Vorrichtung zum Bewegen des Stabs senkrecht auf das Drahtgatter zu und durch dieses hindurch unter Zuführung einer Aufschlämmung aus abrasiv wirkenden Hartstoffen ("Slurry") in einer Trägerflüssigkeit. Die Drehung der Drahtführungsrollen um ihre Achsen führt dabei zu einer Bewegung der Drahtabschnitte des Gatters relativ zum Stab. Durch das Zustellen des Stabs senkrecht zum Gatter gelangen die Drahtabschnitte in Kontakt mit dem Stab und üben bei fortgesetzter Zustellung des Stabs eine Kraft auf den Stab aus. Hartstoffe, Kraft und Relativbewegung bewirken einen Materialabtrag vom Stab, so dass sich die Drahtabschnitte langsam durch den Stab hindurcharbeiten. Die Drahtabschnitte erzeugen dabei parallel zueinander verlaufende Trennspalte im Stab, so dass nach vollständigem Durchtrennen des Stabs eine Vielzahl gleichförmiger Scheiben vorliegt.

Für viele Anwendungen wird eine Vielzahl gleichförmiger Scheiben mit einem hohen Grad an Konstanz ihrer Dicke und Ebenheit über deren gesamte Oberfläche benötigt, beispielsweise Scheiben aus einem Stab einkristallinen Halbleitermaterials als Substrate für die Fertigung photovoltaischer, elektronischer, mikroelektronischer oder mikro-elektromechanischer Bauelemente oder optischer Substrate ("optical flats"), die zudem besonders kostengünstig und in großen Stückzahlen hergestellt werden sollen. Dem Drahttrennläppen kommt hierbei besondere Bedeutung zu.

Eine Vorrichtung und ein Verfahren zum Drahttrennläppen sind beispielsweise angegeben in GB 717874 A.

Beim Drahttrennläppen wird Draht in seiner Längsrichtung von einer Abwickel-(Vorrats-, Frischdraht-) auf eine Aufwickel- (Aufnahme-, Altdraht-) Spule bewegt. Bekannt sind Ausführungen mit Bewegungen in nur eine Richtung und Bewegungen unter ständiger Richtungsumkehr der Bewegungsrichtung. Die Bewegungen können mit veränderlichen Geschwindigkeiten erfolgen. Ein Drahttrennläppen mit Drahtbewegung in nur eine Richtung wird als Unidirektional-Sägen bezeichnet, ein Drahttrennläppen unter ständiger Richtungsumkehr als ein Sägen im "Pilgerschritt"-Verfahren.

Beim Drahttrennläppen unterliegt der Draht einem Verschleiß. Sein Durchmesser nimmt dabei beim Durchlaufen des Drahtgatters von der Frischdraht-Zufuhrseite (Frischdrahtspule) zur Altdraht-Abfuhrseite (Altdrahtspule) ab. Wegen der Abnahme des Drahtdurchmessers durch Verschleiß nimmt bei gleichem Abstand der Drahtführungsrillen auf der Drahtführungsrolle die Dicke der durch Abtrennen vom Stab erhaltenen Scheiben von der Frisch- zur Altdrahtseite zu.

Um dies zu kompensieren, soll sich gemäß DE 102 37 247 A1 der Abstand zwischen zwei Rillen auf der Drahtführungsrolle von der Drahteinlaufseite zur Drahtauslaufseite verringern. Durch den verringerten Rillenabstand können trotz dünneren Sägedrahtes gleichmäßig dicke Scheiben vom Werkstück abgetrennt werden.

Ein wesentliches Element einer Drahtsäge ist die Drahtführungsrolle. Diese ist ein walzenförmiger Körper aus Stahl oder Verbundkunststoffen, deren Funktionsfläche meist die Form eines geraden Kreiszylinders bildet. Die Funktionsfläche umfasst üblicherweise einen Belag aus einem verschleißresistenten zähen Kunststoff, meist Polyurethan, insbesondere duroplastisches Polyurethan. Die Polyurethanschicht ist mit Rillen versehen, die den Draht aufnehmen und ihn führen.

Eine Rille umfasst einen Rillengrund und Rillenflanken. Im Rillengrund kommt der Draht zu liegen, und die Rillenflanke "fängt" den Draht bei dessen Einlauf ein und zentriert ihn in der Rille, so dass er nicht in eine der Nachbarrillen überspringt. Im Stand der Technik sind Drahtführungsrollen mit V-förmigen Rillen bekannt, z.B. aus JP 2006102917 A.

Zudem sind Drahtführungsrollen bekannt, die einen gekrümmten Rillengrund aufweisen. DE 102007019566 A1 offenbart eine Drahtführungsrolle zur Verwendung in Drahtsägen zum gleichzeitigen Abtrennen einer Vielzahl von Scheiben von einem zylindrischen Werkstück, die mit einem Belag einer Dicke von wenigstens 2 mm und höchstens 7,5 mm versehen ist und welcher aus einem Material besteht, das eine Härte nach Shore A von wenigstens 60 und höchstens 99 aufweist, die des Weiteren eine Vielzahl von Rillen beinhaltet, durch die der Sägedraht geführt wird, wobei die Rillen jeweils einen gekrümmten Rillengrund mit einem Krümmungsradius, der durch das 0,25-1,6 fache eines Sägedrahtdurchmessers D gegeben ist, und einen Öffnungswinkel von 60-130° aufweisen. Diese Erfindung beschreibt somit Rillen, deren Rillengrund sowohl enger als auch gleich dem oder weiter als der Sägedraht sein können. Durch die spezielle Rillenform wird eine optimale Führung des Drahts sichergestellt, was die Schnittqualität verbessert. Durch die Härte und Dicke des Belags wird der Verscheiß der Drahtführungsrolle minimiert.

Die aus dem Stand der Technik bekannten Drahtführungsrollen beziehen sich auf die Verwendung von geradem oder glattem Draht. Darunter wird das Volumen eines allgemeinen Zylinders aus Stahl, Metall oder Kunststoff mit sehr großer Höhe bezeichnet. Die Höhe dieses Zylinders wird als Drahtlängsrichtung bezeichnet, die Grundfläche als Drahtquerschnitt. Bedeutung haben glatte Drähte mit kreisförmigem Querschnitt, die als runder glatter Draht bezeichnet werden, insbesondere solche, die aus Stahl ("Pianodraht") bestehen.

Neben glattem Draht ist jedoch auch die Verwendung von strukturiertem Draht denkbar.

Darunter wird ein glatter Draht verstanden, der entlang seiner Längsachse mit einer Vielzahl von Einbuchtungen und Ausstülpungen seines Querschnitts in Richtungen senkrecht zur Drahtlängsachse oder mit einer Vielzahl von Änderungen seiner Querschnittsfläche nach Größe oder Form versehen wurde.

Besondere Bedeutung haben strukturierte Drähte aus glatten runden Stahldrähten mit periodisch entlang ihrer gesamten Länge ohne Veränderung von Form und Größe ihrer Querschnittsfläche um gleiche Beträge senkrecht zur Drahtlängsrichtung verschobenen Querschnitten. Diese Verschiebungen werden oft als "Crimps" bezeichnet, der Betrag der Verschiebung als Amplitude der Crimps und die Länge in Längsrichtung zwischen zwei Verschiebungen als Wellenlänge. Der einem strukturierten Draht zugrunde liegende glatte Draht wird auch als "Kerndraht" des strukturierten Drahts bezeichnet.

Ein Beispiel für einen strukturierten Draht, der mit Crimps in zwei Ebenen senkrecht zu seiner Längsrichtung, jeweils mit einer Amplitude und einer Wellenlänge, versehen ist, gibt WO 2006/067062 A1.

Die Zwischenräume zwischen den Crimps wirken wie "Taschen" oder "Reservoirs", in denen mehr Slurry vom Draht bei Bewegung des Drahts in Drahtlängsrichtung mitgeführt werden kann, ohne abgestreift zu werden, als dies einem glatten Draht vergleichbaren Durchmessers möglich ist. Ein strukturierter Draht weist daher einen besseren Transport der aufgebrachten abrasiven Aufschlämmung auch über große Eingriffslängen des Drahts mit dem Stab auf als ein glatter Draht.

Aus diesem Grund wäre die Verwendung von strukturiertem Draht grundsätzlich wünschenswert.

Der CN103692567B ist ein Verfahren nach dem Oberbegriff des Anspruchs 1 und eine Drahtsäge nach dem Oberbegriff des Anspruchs 9 zu entnehmen.

Der Erfinder hat allerdings erkannt, dass für ein Verfahren zum Trennläppen eines Stabs mittels eines strukturierten Drahts die im Stand der Technik bekannten Drahtführungsrollen und Rillenformen ungeeignet sind.

Zum einen wurden häufige Drahtrisse infolge abgeknickter oder überlasteter Drähte beobachtet. Drahtrisse sind unerwünscht, da sie den Trennprozess unterbrechen, nur mit großem Aufwand repariert und der unterbrochene Trennvorgang fortgesetzt werden kann und die erhaltenen Scheiben dann unerwünschte Welligkeiten oder ungleichmäßige Dicken aufweisen. Zudem waren die im unterbrochenen Drahtgatter verbliebenen Drahtabschnitte nur unter Schwierigkeiten aus den Führungsrillen zu entfernen.

In anderen Fällen führte der Einsatz von strukturiertem Draht auf herkömmlichen Drahtführungsrollen zu Scheiben mit willkürlich welligen Vorder- und Rückseiten. Derartige Scheiben mit über ihre Oberfläche schwankenden Dicken oder Ebenheiten sind als Substrate für elektronische Bauelemente ungeeignet.

Auch wurde beim Trennläppen mit strukturiertem Draht ein besonders hoher und schneller Verschleiß der nach Stand der Technik geformten Rillen in den Polyurethanbelägen der Drahtführungsrollen beobachtet (tief eingeschnittene oder unregelmäßig aufgeweitete Rillen), die schnell zu Wafern sehr schlechter Ebenheit und Dicke führten. Das verursacht hohe Kosten durch häufig erforderlichen Austausch und Aufarbeiten der Drahtführungsrollen (Überschleifen und Neu-Rillieren) und Ausfälle von Scheiben mit Ebenheiten und Dicken außerhalb der hohen Anforderungen.

Die Aufgabe der vorliegenden Erfindung besteht in der Angabe eines Verfahrens zum Drahttrennläppen eines Stabs in eine Vielzahl von Scheiben gleichzeitig unter Verwendung eines strukturierten Drahts, Drahtführungsrollen mit Rillen und einer Aufschlämmung, bei dem der strukturierte Draht nicht reißt, die Rillen einen geringen Verschleiß aufweisen und Scheiben mit einer guten Ebenheit und Gleichförmigkeit ihrer Dicke erhalten werden.

Die Aufgabe wird gelöst durch ein Verfahren mit den Merkmalen des Anspruchs 1 und eine Drahtsäge mit den Merkmalen des Anspruchs 9. Vorteilhafte Ausführungsformen sind den abhängigen Ansprüchen zu entnehmen.

In einer Ausführungsform besteht die Strukturierung des Drahts in einer Vielzahl von Einbuchtungen und Ausstülpungen eines glatten Drahts (nachfolgend als Kerndraht bezeichnet) senkrecht zur Längsrichtung des glatten Drahts.

Für einen strukturierten Draht ist als Einhüllende derjenige gerade Kreiszylinder kleinsten Durchmessers definiert, der den gesamten strukturierten Draht vollständig enthält. Die Grundfläche dieses geraden Kreiszylinders wird als Wirkquerschnitt, der Durchmesser der Grundfläche des Zylinders als Wirkdurchmesser des strukturierten Drahts bezeichnet und die Längsachse der Einhüllenden des Zylinders als Längsachse des strukturierten Drahts.

Vorzugweise beträgt der Durchmesser des Kerndrahts von 130 µm bis 175 µm. Vorzugweise beträgt der Durchmesser der Einhüllenden des strukturierten Drahts dem 1,02- bis 1,25-fachen des Durchmessers des Kerndrahts.

Eine definierte variable Rillenweite, im Rahmen der Erfindung durch den Krümmungsradius des Rillengrunds definiert, ist ein wesentliches Merkmal der Erfindung.

Falls die Rillen enger als der jeweilige Wirkdurchmesser des Drahts sind, kann sich der Draht in den Rillen regelrecht vergraben und beim Drehen der Drahtführungsrollen ungleichmäßig (ruckhaft, klemmend) in die Rillen ein- und wieder aus diesen heraustreten. Dies führt zu den beobachteten Drahtrissen. Zudem lassen sich die im Drahtgatter verbliebener Drahtabschnitte nur mühsam entfernen. Bei glatten Drähten, die ebenfalls reißen können, gelingt die Entfernung der verbliebenen Drahtwindungen - ausgehend von den unterbrochenen Stellen - dagegen leicht und meist von selbst, indem sich infolge der Drahtbiegespannung die Drahtwindungen aus den Rillen lösen.

Falls die Rillen weiter als der jeweilige Wirkdurchmesser des Drahts sind, führt dies zu Scheiben mit schlechter Geometrie. Der Draht wälzt sich in einer zu weiten Rille aufgrund seiner Strukturierung hin- und her, was zu einer schlechten Drahtführung mit entsprechend verwellten Schnittebenen führt.

Entscheidend für das Gelingen der Erfindung ist die Erkenntnis, dass sich strukturierter Draht grundsätzlich anders verhält als glatter Draht.

Glatter Draht unterliegt infolge Materialabriebs (Verschleiß) einer gleichförmigen Dickenabnahme.

Dagegen unterliegt strukturierter Draht nach Drahtform und Nutzungsgrad einem ungleichförmigen Verschleiß.

Der Wirkdurchmesser des strukturierten Drahts nimmt anfangs schnell und dann mit zunehmendem Nutzungsgrad langsamer ab. Der Draht verschleißt isotrop und homogen über die gesamte Oberfläche des dem strukturierten Draht zugrundeliegende Kerndrahts. Zudem zeigt sich ein anisotroper Verschleiß im Bereich der exponierten "Spitzen" der Crimps (der Draht wird dort oval).

Für besonders gute Schnittergebnisse muss die Rillenform für jede Rille so ausgeführt werden, dass für jede Windung, also für jeden dortigen durch die dortige Drahtspannung und den dortigen Verschleißgrad bestimmten Wirkdurchmesser, die geforderte Bedingung erfüllt ist.

Ein strukturierter Draht ist gekennzeichnet durch seinen Wirkdurchmesser. Der Wirkdurchmesser wird zum einen bestimmt durch die Drahtspannung. Strukturierter Draht wirkt wie eine Spiralfeder, deren Durchmesser ebenfalls mit der zunehmenden Zugspannung in Federachsrichtung ab- und mit abnehmender Spannung zunimmt.

Zusätzlich wird der Wirkdurchmesser des strukturierten Drahts bestimmt durch den - momentanen - Verschleißzustand.

Der Verschleißgrad hängt ab von der durchlaufenen kumulativen Eingriffslänge des Drahts mit dem Stab, der je Stab-Spanvolumen eingesetzten Länge an Sägedraht und Eigenschaften des Drahts wie Härte (Kohlenstoffgehalt), Festigkeit (durch Einzelheiten der Drahtherstellung, bspw. Grad der Kaltverfestigung im letzten Drahtziehschritt) usw.).

Die Erfindung sieht ein Verfahren nach dem Anspruch 1 zum gleichzeitigen Abrennen einer Vielzahl von Scheiben von einem Stab mittels eines strukturierten Drahts vor. Die Drahtsäge umfasst in an sich bekannter Weise Drahtführungsrollen mit Achsen und Rillen und eine Zustellvorrichtung. Zudem wird eine Aufschlämmung abrasiv wirkender Hartstoffe in einem flüssigen Träger zugeführt.

Vorzugweise umfasst die Aufschlämmung Hartstoffe ausgewählt aus der Gruppe bestehend aus Siliciumcarbid (SiC), Siliciumnitrid (Si3N4), Siliciumdioxid (SiO2), Borcarbid (B4C), Bornitrid (BN) und Diamant.

Als Trägerflüssigkeit eigen sich insbesondere Glykol oder Öl.

Vorzugweise ist der strukturierte Draht spiralförmig so unter einer senkrecht zur Grundfläche seiner Einhüllenden wirkenden Spannung in den Rillen um die Drahtführungsrollen herumgeführt, dass zwischen zwei Drahtführungsrollen ein ebenes Gatter aus parallel zueinander verlaufenden Abschnitten des Drahts entsteht. Der Begriff Scheibe bezeichnet im Rahmen der Erfindung einen allgemeinen Zylinder mit einer Höhe, die klein ist gegen den Durchmesser seiner Grundfläche. Die Zylindergrundfläche einer Scheibe wird auch als Rückseite und die Zylinderdeckfläche als Vorderseite der Scheibe bezeichnet. Ein allgemeiner Zylinder bezeichnet das Volumen, das von einer beliebigen ebenen Kurve, die die Grundfläche des Zylinders bildet, bei Verschieben um eine feste Strecke (Höhe) überstrichen wird. Als Deckfläche eines allgemeinen Zylinders wird dabei die Fläche bezeichnet, in die die Grundfläche durch Verschieben um die Höhe überführt wird.

In einer Ausführungsform handelt es sich um Stäbe in Form eines Zylinders mit polygonalen oder kreisförmigen Grundflächen, insbesondere um Stäbe mit quadratischen, achteckigen oder kreisförmigen Grundflächen. Ein Zylinder mit polygonaler Grundfläche wird auch als Prisma bezeichnet.

In einer weiteren Ausführungsform handelt es sich um Stäbe aus einkristallinem oder polykristallinem Halbleitermaterial.

Beispiele für Halbleiter sind Elementhalbleiter aus Silicium, Germanium oder Siliciumcarbid oder Mischhalbleiter aus Galliumarsenid und anderen Elementen der III. und V. Gruppe des Periodensystems. Beispiel für prismenförmige Stäbe sind Stäbe aus ein- oder polykristallinem Silicium, aus dem durch Trennläppen Scheiben zur Herstellung photovoltaischer Zellen hergestellt werden.

In einer Ausführungsform handelt es sich um einen ein Stab aus einkristallinem Silicium, aus dem mittels Trennläppen Scheiben, sogenannte "Wafer", als Substrate zur Strukturierung elektronischer, mikroelektronischer oder mikro-elektromechanischer Elemente hergestellt werden. An derartige Substrate werden besonders hohe Anforderungen bezüglich ihrer Planparallelität von Vorder- und Rückseite gestellt.

Mittels Drahttrennläppen hergestellte Scheiben aus einkristallinem Halbleitermaterial als Substrate für elektronische Bauelemente müssen oft eine bestimmte kristallographische Orientierung aufweisen. Durch gezielt Material abtragende Bearbeitung vor dem Drahttrennläppen wird aus dem größeren und unregelmäßig geformten Rohkristall oft ein gerade kreiszylindrischer Stab herausgearbeitet, dessen Achse der gewünschten kristallographischen Orientierung der Scheiben entspricht. Daher ist bevorzugt die Stabachse parallel zu den Achsen der Drahtführungsrollen ausgerichtet.

Alternativ kann aus einem Rohkristall auch ein gerade kreiszylindrischer Stab mit einer anderen als für die nach Trennläppen erhaltenen Scheiben gewünschte kristallographische Orientierung herausgearbeitet werden und die Stabachse dann so in einem Winkel zu den Achsen der Drahtführungsrollen ausgerichtet werden, dass die nach Abtrennen erhaltenen Scheiben dann die gewünschte Orientierung aufweisen. Daher weist nach einer anderen Ausführungsform die Stabachse gegenüber den Achsen der Drahtführungsrollen beim Drahttrennläppen einen Winkel auf.

Die Strukturierung des Drahts besteht in einer Vielzahl von Einbuchtungen und Ausstülpungen eines Kerndrahts, ohne die Querschnittsfläche des Kerndrahts in Form oder Größe zu ändern.

In einer Ausführungsform weist der strukturierte Draht im Mittel über seine Längsrichtung Einbuchtungen und Ausstülpungen innerhalb aller Ebenen senkrecht zur Längsrichtung auf.

In einer Ausführungsform handelt es sich um einen strukturierten Draht mit Torsion. Mit Torsion wird eine Verdrillung des Drahts um seine Längsrichtung bezeichnet.

Dabei werden in einer Ausführungsform die im Mittel über seine Längsrichtung in alle Ebenen senkrecht zur Längsrichtung weisenden Einbuchtungen und Ausstülpungen mittels einer Strukturierung des Kerndrahts in einer Ebene senkrecht zur Längsrichtung und einer Torsion (Verdrillung) des strukturierten Drahts um die Längsachse des strukturierten Drahts gebildet, so dass der so entstehende tordierte strukturierter Draht die Form einer Helix (zylindrische Spirale, Wendel) aufweist.

In einer Ausführungsform wird die Strukturierung im Mittel über die Längsrichtung des Drahts in alle Ebenen senkrecht zur Längsrichtung mittels einer Strukturierung in einer ersten Ebene senkrecht zur Drahtlängsrichtung mit einer ersten Amplitude und einer ersten Wellenlänge und einer Strukturierung in einer zweiten Ebene senkrecht zur Drahtlängsrichtung, die senkrecht auf der ersten Ebene steht, mit einer zweiten Amplitude und einer zweiten Wellenlänge und einer Torsion des strukturierten Drahts um seine Längsachse gebildet.

In einer Ausführungsform nehmen die Krümmungsradien der Rillen nicht monoton mit der Position der Rille im Drahtgatter von dem Frischdraht-Einlauf- zur Altdraht-Auslaufseite ab. Dies trägt dem ungleichförmigen Verschleiß des strukturierten Drahts Rechnung.

Durch ein gleichsinniges Drehen der Drahtführungsrollen um ihre Achsen und eine Zuführung der Aufschlämmung auf das Drahtgatter, ein Bewegen des Stabs mittels der Zustellvorrichtung senkrecht auf die Ebene des Drahtgatters zu und ein In-Kontakt-Bringen des Stabs mit den Drahtabschnitten des Gatters unter Zuführung der Aufschlämmung und Drehung der Drahtführungsrollen, erfolgt durch weitere Bewegung des Stabs senkrecht auf die Ebene des Drahtgatters zu und durch dieses hindurch unter fortgesetzter Zuführung der Aufschlämmung und Drehung der Drahtführungsrollen ein vollständiges Durchtrennen des Stabs.

In einer Ausführungsform besteht das Bewegen des Drahts in einer fortwährenden Abfolge von Paaren von Richtungsumkehrungen, wobei ein Paar aus Richtungsumkehrungen jeweils ein erstes Bewegen des Drahts in eine erste Richtung in Drahtlängsrichtung um eine erste Länge und ein nachfolgendes Bewegen des Drahts in eine zweite, der ersten Richtung genau entgegengesetzte Richtung um eine zweite Länge umfasst und wobei die erste Länge größer als die zweite Länge gewählt wird. Dies wird nachfolgend als Pilgerschrittverfahren bezeichnet.

Aufgrund der annähernden Symmetrie der wechselnden Richtung der Drahtbewegung entstehen beim Drahttrennläppen im Pilgerschrittverfahren Scheiben mit deutlich reduzierter Keiligkeit. Der Hauptvorteil eines Drahttrennläppens im Pilgerschritt besteht jedoch darin, dass aufgrund der fortwährenden Richtungsumkehr der Drahtbewegung die den Materialabtrag verursachende Aufschlämmung von Hartstoffen nur bis zur Stabmitte transportiert werden muss. Damit können auch Stäbe mit sehr großen maximalen Eingriffslängen des Drahts mit dem Stab aufgetrennt werden, beispielsweise Stäbe aus einkristallinem Halbleitermaterial mit 300 mm oder 450 mm Durchmesser.

In einer Ausführungsform wird der Draht beim Bewegen in die erste Richtung um die erste Länge dem Drahtgatter mit einer ersten Zugkraft in Drahtlängsrichtung aus einem Drahtvorrat zugeführt und der beim Bewegen in die zweite Richtung um die zweite Länge dem Drahtgatter mit einer zweiten Zugkraft in Drahtlängsrichtung aus einem Drahtvorrat zugeführt.

In einer Ausführungsform ist das Verhältnis aus der zweiten Zugkraft zur ersten Zugkraft gleich dem Verhältnis der kleinsten Querschnittsfläche des Kerndrahts im Drahtabschnitt, der beim ersten Bewegen in die erste Richtung das Drahtgatter verlässt, und der größten Querschnittsfläche des Kerndrahts im Drahtabschnitt, der beim ersten Bewegen in die erste Richtung dem Drahtgatter aus dem Drahtvorrat zugeführt wird, gewählt.

In einer Ausführungsform ist das Verhältnis aus der zweiten Zugkraft zur ersten Zugkraft gleich dem Verhältnis der Querschnittsfläche der Einhüllenden des Drahtabschnitts, der beim ersten Bewegen in die erste Richtung das Drahtgatter verlässt, und der Querschnittsfläche der Einhüllenden des Drahtabschnitts, der beim ersten Bewegen in die erste Richtung dem Drahtgatter aus dem Drahtvorrat zugeführt wird, gewählt.

Die Fertigung der Drahtführungsrollen bzw. die Rillierung der Drahtführungsrollen erfolgt in an sich bekannter Weise mittels eines Schleif- oder Drehwerkzeugs, das dünner als die auszustechende Rille ist und das die geforderte jeweilige Rillenkontur entsprechend abfährt.

Die erforderliche Rillenweite (Krümmungsradius des Rillengrunds) ändert sich mit Änderung der Drahtspannung, Wahl des Drahtmaterials (Festigkeit) und insbesondere mit der Länge des je Stab-Spanvolumen eingesetzten Drahts.

Aus dem Stand der Technik war bereits bekannt, den Rillenabstand zum Ausgleich des mit zunehmender Gatterposition abnehmenden Drahtdurchmessers infolge Verschleißes zu verringern. Bei der Fertigung der erfindungsgemäßen Drahtführungsrolle wird zudem die Rillenweite für jede einzelne Gatterposition so gewählt, dass die unter Berücksichtigung von Drahtlänge und Drahtspannung zum Wirkdurchmesser des eingesetzten strukturierten Drahts passt, also für jede Rille der Krümmungsradius des Rillengrunds dem 1-1,5 fachen des Wirkdurchmessers des strukturierten Sägedrahts in der Rille entspricht.

### Kurzbeschreibung der Figuren

**Fig. 1** zeigt einen runden glatten Draht (1A), einen strukturierten Draht (1B), einen strukturierter Draht bei Einwirkung einer Zugkraft (1C), einen strukturierter Draht mit Torsion (1D) und einen strukturierten Draht mit Zugkraft und Torsion (1E).
**Fig. 2** zeigt eine Messkurve der im Drahtgatter gemessenen Zugkraft gegen die Position des jeweils gemessenen Drahtabschnitts im Gatter.
**Fig. 3** zeigt eine Messkurve des Wirkdurchmessers des strukturierten Drahts gegen eine Messposition im Drahtgatter.
**Fig. 4** zeigt eine Messkurve des Wirkdurchmessers des strukturierten Drahts gegen die Zugkraft.
**Fig. 5** zeigt den Ausschnitt einer Drahtführungsrolle an zwei Gatterpositionen.

### Liste der verwendeten Bezugszeichen

- **1**: glatter Draht;
- **2**: strukturierter Draht;
- **3**: Längsachse des glatten Drahts;
- **4**: Längsachse der Einhüllenden des strukturierten Drahts;
- **5**: Messkurve der Zugkraft gegen die Gatterposition;
- **6**: Tiefe der Rille bei Gatterposition **GP1;**
- **7**: Tiefe der Rille bei Gatterposition **GP2**;
- **8**: Messkurve des Durchmessers der Einhüllenden gegen Zugkraft;
- **9**: Rille bei Gatterposition **GP1;**
- **10**: Rille bei Gatterposition **GP2**;
- **11**: Öffnungswinkel der Rille bei Gatterposition **GP1;**
- **12**: Öffnungswinkel der Rille bei Gatterposition **GP2**;
- **13**: Ebene / nächster Punkt der Drahtoberfläche zum Stab;
- **14**: Drahtführungsrolle;
- **15**: Rillenflanke;
- **16**: Rillengrund;
- **17**: Durchmesser der Einhüllenden gegen Gatterposition;
- **18**: Regressionsgerade für alten (verschlissenen) strukturierten Draht;
- **19**: Regressionsgerade für frischen strukturierten Draht;
- **20**: Minimum der Verlaufskurve Zugkraft gegen Gatterposition;
- **21**: Achse der Drahtführungsrolle;
- **22**: Zylindermantel der Drahtführungsrolle;

- **A0**: Amplitude der Struktur ohne Zugkraft;
- **AF**: Amplitude der Struktur bei Zugkraft F;
- **D**: Durchmesser des glatten Drahts;
- **E**: Durchmesser der Einhüllenden;
- **E0**: Durchmesser der Einhüllenden ohne Zugkraft;
- **EF**: Durchmesser der Einhüllenden bei Zugkraft **F;**
- **EF1**: Durchmesser der Einhüllenden bei Zugkraft **F1;**
- **EF2**: Durchmesser der Einhüllenden bei Zugkraft **F2;**
- **F**: Kraft;
- **GP**: Gatterposition;
- **GP1**: Gatterposition **1;**
- **GP2**: Gatterposition **2;**
- **L0**: Wellenlänge der Struktur ohne Zugkraft
- **LF**: Wellenlänge der Struktur bei Zugkraft **F**
- **x**: Richtung senkrecht zur Längsrichtung und zur Achse **y**
- **y**: Richtung senkrecht zur Längsrichtung und zur Achse **x**
- **z**: Richtung der Längsrichtung

In einer Ausführungsform wird der kleinste Abstand jeder Rille zur Achse **21** der Drahtführungsrolle **14** so gewählt, dass alle Punkte der Einhüllenden mit dem größten Abstand zur Achse **21** der Drahtführungsrolle **14** in jeder Rille den gleichen Abstand zur Achse **21** der Drahtführungsrolle **14** aufweisen.

Ein strukturierter Draht weist wegen der durch seine Crimps gebildeten "Taschen" oder "Reservoirs" einen besseren Transport der aufgebrachten abrasiven Aufschlämmung auch über große Eingriffslängen des Drahts mit dem Stab auf als ein Glatter Draht, von dem beim Eintritt in den Trennspalt der größte Teil der Aufschlämmung an der Stabmantelfläche abgestreift wird. Ein Drahttrennläppen mit strukturiertem Draht eignet sich daher besonders für das Trennen von Stäben mit großen Durchmessern, beispielsweise Stäben aus einkristallinem Silicium mit einem Durchmesser von 300 mm oder 450 mm. Der strukturierte Draht erlaubt auch höhere Schnittgeschwindigkeiten und somit verkürzte Zeiten zum vollständigen Auftrennen des Stabs in Scheiben. Dies ist besonders wirtschaftlich und daher vorteilhaft. Schließlich führt der verbesserte Transport der Aufschlämmung zu einer verbesserten Qualität des Schnitts mit Scheiben, die eine glattere Oberfläche und eine besonders ebene Form aufweisen.

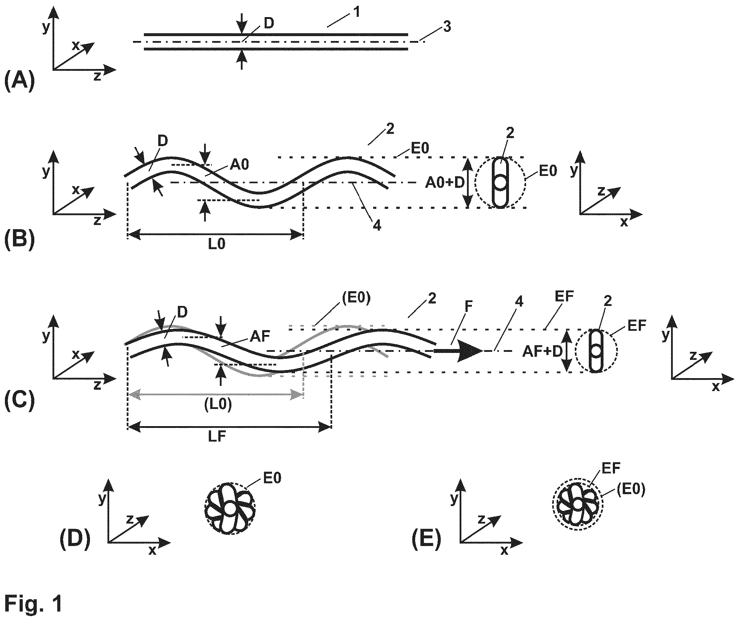

**Fig. 1 (A)** zeigt einen runden glatten Draht **1** mit einem Durchmesser **D** und einer Mittelachse **3,** entlang der die Drahtlängsrichtung verläuft. Das Koordinatenkreuz gibt die jeweilige Blickrichtung an: **z** bezeichnet die Drahtlängsrichtung und **x** und **y** die beiden Drahtquerrichtungen.

**Fig. 1 (B)** zeigt einen strukturierten Draht **2,** basierend auf einem glatten Draht **1** (Kerndraht) mit Durchmesser **D,** der ohne Zugkraft in Drahtlängsrichtung eine Strukturierung mit einer Amplitude **A0** und einer Wellenlänge **L0** besitzt. Der Durchmesser der Einhüllenden, **E0,** ist gegeben durch Kerndrahtdurchmesser **D** und Amplitude **A0, E0** = **A0** + **D.** Die Strukturierung besteht im gezeigten Beispiel in einer Verschiebung der Querschnitte des glatten Drahts **1** in Querrichtung **y.** Die Achse der Einhüllenden **E0** bezeichnet die Längsachse **4** des strukturierten Drahts **2.** Blick einmal auf die y/z-Ebene (links) und einmal auf die **x/y-**Ebene (rechts). **Fig. 1 (C)** zeigt den strukturierten Draht **2** aus **Fig. 1 (B)** bei Einwirkung einer Zugkraft **F** in Längsrichtung **4** mit verringerter Amplitude **AF** und erhöhter Länge **LF** der Strukturierung. Die Einhüllende **EF** bei Zugkraft F ist gegeben durch **EF** = **AF** + **D.** Blick auf die **y/z-**Ebene (links) und die **x/y-**Ebene (rechts).

**Fig. 1 (D)** zeigt den strukturierten Draht **2** aus **Fig. 1 (B)** ohne Zugkraft nach zusätzlicher Torsion (Verdrillung) des strukturierten Drahts um die **z-**Achse (Längsrichtung des strukturierten Drahts **2).**

**Fig. 1 (E)**

zeigt den strukturierten Draht **2** aus **Fig. 1 (C)** bei Zugkraft **F** nach zusätzlicher Torsion (Verdrillung) des strukturierten Drahts **2** um die **z-**Achse (Längsrichtung des strukturierten Drahts **2).** Gegenüber **Fig. 1 (D)** (keine Zugkraft) ist der Durchmesser der Einhüllenden **EF** bei einer Zugkraft **F** gegenüber der Einhüllenden **E0** ohne Zugkraft kleiner.

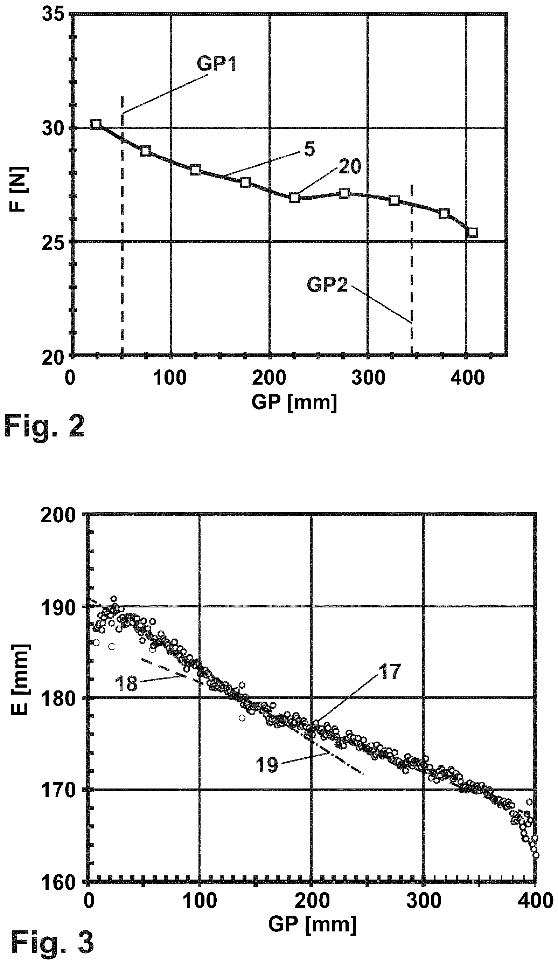

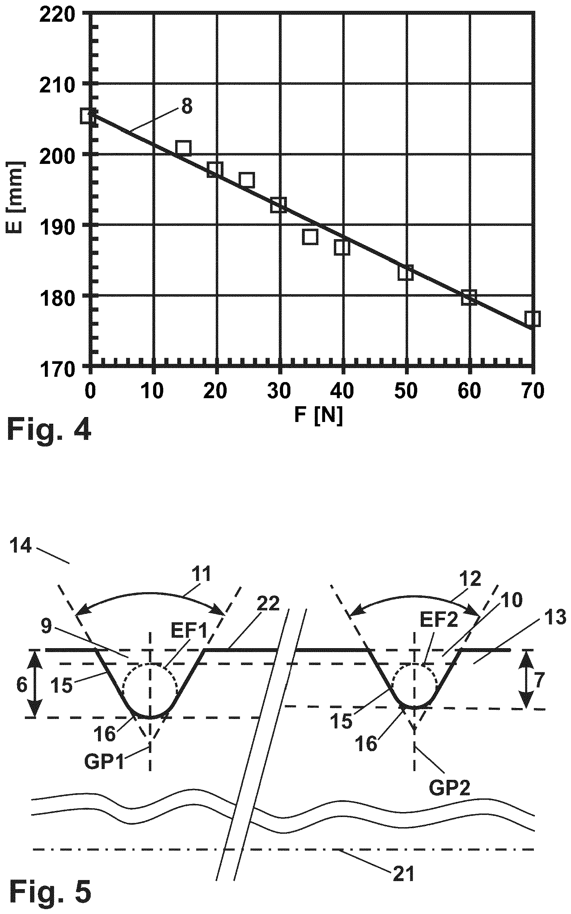

**Fig. 2** zeigt die Messkurve **5** der im Drahtgatter gemessenen Zugkraft **F** (in Newton, N) gegen die Position des jeweils gemessenen Drahtabschnitts im Gatter, **GP** (in Millimeter, mm), wobei die Frischdraht-Zufuhrseite bei 0 mm und die Altdraht-Abfuhrseite des Drahtgatters bei 400 mm liegt. Markiert sind ausgezeichnete Gatterpositionen **GP1** und **GP2,** auf die in **Fig. 5** Bezug genommen wird.

Die Kraftkurve **5** verläuft nicht von der Frischdraht-Zufuhr- zur Altdraht-Abfuhrseite monoton fallend, wie es aufgrund des Drahtverschleißes allein zu erwarten wäre, sondern weist ein Minium 20 auf, das durch Details des gewählten Trennprozesses nach dem Pilgerschrittverfahren, insbesondere den Längen der Drahtvor- und -Rückwärtsbewegung gegeben ist.

**Fig. 3** zeigt die Messkurve **17** des Wirkdurchmesser **E** (Durchmesser der Einhüllenden, in Millimetern, mm) des Strukturierter Drahts gegen die Messposition **GP** im Drahtgatter.

Deutlich ist zu sehen, dass der Wirkdurchmesser **E** des strukturierten Drahts, im Gegensatz zu einem glatten Draht, dessen Querschnitt proportional zum kumulativen Spanvolumen (also proportional zur Gatterposition **GP**) abnimmt, einem mehrstufigen Verschleiß unterliegt, nämlich anfangs (Regressionsgerade **19)** einem schnelleren Verschleiß, dann nachfolgend (Regressionsgerade **18)** einem langsameren Verschleiß **19** der Strukturierung.

Messungen des Drahtquerschnitts mittels zweier gekreuzter Lichtbandmikrometer an Drahtabschnitten aus den verschiedenen Gatterpositionen **GP** zeigten, dass der schnelle Verschleiß **19** von einem selektiven Materialabtrag von den exponierten Spitzen der Crimps dominiert wird, während, nach diesem "Kappen" der Crimp-Spitzen, beim nachfolgenden Verschleiß **18** ein mehr gleichförmig über die gesamte Oberfläche verteilter Verschleiß des Kerndrahts dominiert.

**Fig. 4** zeigt die Messkurve 8 des Wirkdurchmessers **E** des strukturierten Drahts gegen die Zugkraft **F** (in Newton, N), der der strukturierte Draht in einem Messaufbau unterworfen wurde.

Es zeigt sich, dass die Spannungs-Dehnungs-Kurve **8** über weite Teile der Kraft weitgehend linear verläuft. Die Steigung der Spannungs-Dehnungs-Kurve **8** wird als Federkonstante des strukturierten Drahts in dessen Längsrichtung bezeichnet.

**Fig. 5** zeigt den Ausschnitt einer Drahtführungsrolle **14** an zwei Gatterpositionen, **GP1** und **GP2** (vgl. **Fig. 2****),** mit erfindungsgemäßen Rillen **9** und **10.**

Jede Rille setzt sich zusammen aus einem Rillengrund **16** und einer Rillenflanke **15.** Der Rillengrund **16** ist der Teil der Rille, der den geringsten Radialabstand zur Achse **21** der Drahtführungsrolle **14** aufweist. Der Draht liegt am Rillengrund **16** aufgrund seiner Zugspannung in Längsrichtung und Windung um die Drahtführungsrolle **14** mit einer Kraft auf, während er dabei die Rillenflanken **15** nicht berührt.

In der Rille **9** bei Gatterposition **GP1** weist der Draht infolge des dort vorliegenden Grades seiner Abnutzung und der dort vorherrschenden Drahtspannung einen Wirkdurchmesser **EF1** auf; in der Rille **10** bei Position **GP2** entsprechend einen Wirkdurchmesser **EF2**.

Erfindungsgemäß ist der Krümmungsradius des Rillengrunds **16** jeweils dem tatsächlichen Wirkdurchmesser des strukturierten Drahts **2** in der jeweiligen Rille angepasst.

Als vorteilhaft hat sich erwiesen, wenn zusätzlich die Tiefen **6** und **7** der Rillen jeweils so gewählt werden, dass die Außenseite der Drahtwirkdurchmesser **EF1** und **EF2** jeweils in einer Ebene **13** liegen.

Dabei bezeichnet die Tiefe den kleinsten Radialabstand der Rille zur Achse **21** der Drahtführungsrolle **14.**

Die Öffnungswinkel **11** und **12** der Flanken **15** und **16** der Rillen **9** und **10** können gleich oder auch voneinander verschieden sein. Wenn besonders dünne Scheiben vom Stab abgetrennt werden sollen, weisen benachbarte Rillen vorzugweise einen besonders geringen Abstand voneinander auf.

Bei tiefen Rillen kann dann ein mit abnehmendem Rillenabstand abnehmender Öffnungswinkel konstruktiv erzwungen sein, wenn zwischen benachbarten Rillen noch ein ausreichend breiter Steg an unrilliertem Zylindermantel **22** der Drahtführungsrolle **14** stehen bleiben soll, damit der Draht noch sicher in den Rillen geführt wird und nicht versehentlich in Nachbarrillen überspringt.

Der Wirkdurchmesser (Durchmesser seiner Einhüllenden) eines strukturierten Drahts **2** ist abhängig von der Zugkraft **F,** unter der der strukturierte Draht in Längsrichtung steht.

Für einen Beispieldraht mit 175 µm Kerndurchmesser seines zugrundeliegenden glatten Drahts **1** nahm der Wirkdurchmesser von **F** = 0 N (kräftefrei) bis F = 70 N (Zugkraft nahe der Reißspannung des Drahts, die bei 75 N - 80 N liegt) von etwa 205 µm auf 176 µm ab.

Für Zugkräfte, die deutlich kleiner als die Reißspannung sind, erfolgt die Abnahme des Wirkdurchmessers annähernd proportional zur Zugkraft. Der strukturierte Draht **2** verhält sich dann annähernd wie eine ideale Feder.

**Fig. 4** gibt den gemessenen Zusammenhang zwischen Zugkraft **F und** Wirkdurchmesser **E** für einen 175 µm Beispieldraht wieder. Ein glatter Draht **1** weist im Gegensatz zu einem strukturierten Draht **2** unter Zugkraftänderung keine messbare Durchmesseränderung auf.

Der Wirkdurchmesser wurde mit einem mechatronischen Dickentaster mit breiter Messplatte (um jeweils die Kontaktpunkte zwischen Draht und Messtaster mit dem größten Abstand einzuschließen) an mehreren Stellen und unter mehreren Drehwinkeln des strukturierten Drahts **2** bei der angegebenen Drahtlängsspannung ermittelt.

Der Wirkdurchmesser eines strukturierten Drahts **2** ändert sich mit dem Verschleiß des Drahtes.

Der Materialverlust eines glatten Drahtes erfolgt durch Verschleiß proportional zum Spanvolumen.

Mit Spanvolumen bezeichnet man das Volumen an Werkstückmaterial (Stabmaterial), das das Werkzeug (Draht und Abrasivstoffe) Material abtragend zerspant hat.

Der Quotient aus Materialverlust (Draht) und Spanvolumen (Werkstück, Stab) bildet beim glatten Draht **1** eine Konstante.

Die Proportionalitätskonstante ist unter anderem durch die Eigenschaften der verwendeten Hartstoffe (Härte, Korngröße, Korngrößenverteilung, Kornform usw.) bestimmt.

Es wurde beobachtet, dass im Gegensatz zum Verschleiß eines glatten Drahts die Abnahme des Wirkdurchmessers eines strukturierten Drahts **2** nicht proportional zum Spanvolumen verläuft. Stattdessen zeigten Durchmessermessungen, die an frischen und zu verschiedenen Graden verschlissenen strukturierten Drähten **2** mittels gekreuzter Lichtbandmikrometer (Durchmesser-Messung in zwei senkrecht aufeinander stehenden Drahtquerrichtungen gleichzeitig) durchgeführt wurden, dass der dem strukturierten Draht **2** zugrundeliegende glatte Draht **1** etwa gleichmäßig (proportional zum Spanvolumen), die Amplitude der Crimps jedoch nicht-proportional zum Spanvolumen abnahm.

Bei einem Beispiel-Drahttrennverfahren, wurden 58 km Gesamtlänge eines Strukturierter Drahts mit 175 µm Durchmesser des frischen Kerndrahts und 191 µm Wirkdurchmesser des frischen Strukturierter Drahts bei 33 N Zugkraft in Längsrichtung einem Drahtgatter mit 321 Rillen zugeführt und ein 360 mm langer kreiszylindrischer Stab mit 300 mm Durchmesser aus einkristallinem Silicium in 322 Scheiben zertrennt.

Das Trennläppen wurde im Pilgerschrittverfahren durchgeführt, wobei in jedem Pilgerschritt der Draht mit 30 N dem Drahtgatter auf der Frischdrahtseite zugeführt und um 320 m von der Frisch- zur Altdrahtspule bewegt; anschließend mit 30 N dem Drahtgatter auf der Altdrahtseite zugeführt und um 211 m von der Alt- zur Frischdrahtspule bewegt wurde.

Wirk- und Kerndurchmesser des Strukturierter Drahts wurden nach Unterbrechen des Drahttrennläppprozesses in Abhängigkeit von der Gatterposition **GP** mit dem Lichtbandmikrometer gemessen.

Das Ergebnis zeigt **Fig. 3****.** Das vom strukturierten Draht in den Schnittspalten zertrennte Volumen an Werkstückmaterial (Spanvolumen) ist proportional zur Drahtposition **GP** im Gatter (kumulatives Spanvolumen bis zu dieser Gatter-/Drahtposition).

Die 33 N Zugkraft ergeben sich aus 30 N, mit denen der Frischdraht dem Gatter zugeführt wurde, die weiteren 3 N wurden aus der beobachteten Durchbiegung des Draht während des Trennläppens in Stabzustellrichtung aus der Federkonstante errechnet, die sich aus dem Zusammenhang von Wirkdurchmesser gegen Längszugkraft ergibt **(****Fig. 4****).**

Die Drahtdurchbiegung ergibt sich aus der Kraft, die der Draht auf den Stab ausüben muss, damit unter Relativbewegung von Draht zu Stab und Zugabe der Abrasivstoff-Aufschlämmung ein Materialabtrag bewirkt wird. Sie ist auch von der Geschwindigkeit des Drahtvorschubs (Zeitspanvolumen) abhängig und betrug in dem im Beispiel gewählten Trennläppprozess etwa 6 mm.

Ergänzend wurde die in Stabvorschubrichtung auf den Draht ausgeübte Kraft auch mittels eines Dreiachs-Kraftsensors auf Basis von Piezoelementen, der zwischen dem Stab und der Vorrichtung zum Zustellen des Stabs auf das Drahtgatter zu montiert war, ermittelt.

Die Drahtlängsspannung über das Drahtgatter ist nicht konstant. Es wurde beobachtet, dass sich die Spannung des Drahts im Drahtgatter in Abhängigkeit von der Position in Achsrichtung der Drahtführungsrolle **14** (Gatterposition **GP)** ändert. Der Zusammenhang erwies sich als nicht linear.

Das Ergebnis der Messung des angegebenen Beispieldrahts und Beispiel-Trennläppprozesses zeigt **Fig. 2****.**

Die Drahtspannung wurde mit einem Zugspannungsmessgerät ermittelt. Die für den Messzweck verwendeten Drahtführungsrollen wiesen eine gerade kreiszylindrische Form ihrer Funktionsflächen, die aus Polyurethan waren, auf, und die Polyurethanbeschichtung war mit nach Form und Tiefe identischen Rillen mit von der Frisch- zur Altdrahtseite der Abnahme des Drahtwirkdurchmessers abnehmenden Abständen zueinander versehen. Die Achsen der Drahtführungsrollen **14** waren parallel zueinander angeordnet.

Es zeigte sich insbesondere, dass der Verlauf der Drahtspannung nicht nur von den bekannten Details der Drahtführungsrolle **14** (Form, Rillentiefe) und dem Drahtverschleiß (Durchmesserabnahme, Wicklungslängen um die Drahtführungsrollen) abhing, sondern insbesondere auch von der Wahl der Längen der Drahtbewegung während des Pilgerschritts.

Insbesondere wurde ein lokales Minium 20 der gemessenen Kurve des Verlaufs der Drahtzugkraft **F** im Drahtgatter gegen die Gatterposition **GP** beobachtet **(****Fig. 2****).**

Die Breiten der Rillen in den Drahtführungsrollen **14** müssen an allen Positionen des Drahtgatters dem Wirkdurchmesser des strukturierten Drahts **2** entsprechen.

Versuche mit zylindrischen Drahtführungsrollen **14** mit Rillen gleicher Tiefe aber verschiedenen Breiten ergaben, dass eine Rille mit einer Breite, die geringer ist als der Wirkdurchmesser des Strukturierter Drahts in dieser Rille besonders schnell verschleißt, dort abgetrennte Wafer mit schlechter Ebenheit ergibt und häufiger zu Drahtrissen führt.

Ebenso wurde beobachtet, dass eine Rille, die um mehr als 50 % breiter als der Wirkdurchmesser des strukturierten Drahts **2** in dieser Rille ist, zwar langsamer verschleißt, aber ebenfalls zu dort abgetrennten Wafern mit schlechter Ebenheit führt, vermutlich weil eine weite Rille während des Trennvorgangs den Draht nicht sicher auf einer möglichst ebenen Fläche durch den Stab führt.

Nur eine Rille mit einem Rillengrund, dessen Krümmungsdurchmesser dem des Wirkdurchmessers des in ihr verlaufenden strukturierten Drahts **2** mit dem dort gegebenen Abnutzungsgrad des Drahts und der dort herrschenden Drahtspannung gleicht oder bis maximal 50 % größer ist, ermöglicht sowohl einen geringen Rillenverschleiß als auch einen für anspruchsvolle Anwendungen erforderlichen Grad an Planparallelität von Vorder- und Rückseite der jeweils erhaltenen Scheiben.

Daraus ergab sich das erfindungsgemäße Merkmal, wonach der Grund jeder Rille, auf dem der strukturierte Draht **2** aufliegt, einen Krümmungsradius aufweist, der für jede Rille gleich oder bis zu 1,5-mal größer ist als der Radius der Einhüllenden des strukturierten Drahts, die der strukturierte Draht **2** in der jeweiligen Rille aufweist.

Die vorstehende Beschreibung beispielhafter Ausführungsformen ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren. Daher sollen alle derartigen Abänderungen und Modifikationen sowie Äquivalente durch den Schutzbereich der Ansprüche abgedeckt sein.

## Patentansprüche

1. Verfahren zum gleichzeitigen Abtrennen einer Vielzahl von Scheiben von einem Stab,
indem der Stab durch ein von zwei sich gleichsinnig drehenden Drahtführungsrollen (14) aufgespanntes Drahtgatter aus strukturiertem Sägedraht (2) bewegt wird,
während dem Drahtgatter eine Aufschlämmung zugeführt wird,
wobei die Strukturierung des Drahts in einer Vielzahl von Einbuchtungen und Ausstülpungen eines glatten Kerndrahts senkrecht zur Längsrichtung des Kerndrahts besteht,
wobei der strukturierte Sägedraht (2) durch Rillen (9, 10) der zwei Drahtführungsrollen (14) geführt wird,
**dadurch gekennzeichnet, dass** ein Grund jeder Rille (16), auf dem der strukturierte Draht (2) aufliegt,
einen gekrümmten Rillengrund (16) mit einem Krümmungsradius aufweist,
der für jede Rille gleich dem oder bis zu 1,5-mal größer ist als der Radius der Einhüllenden des strukturierten Drahts (2),
die der strukturierte Draht (2) in der jeweiligen Rille aufweist, wobei als Einhüllende derjenige gerade Kreiszylinder kleinsten Durchmessers verstanden wird, der den gesamten strukturierten Draht vollständig enthält.

2. Verfahren nach Anspruch 1, wobei die im Mittel über seine Längsrichtung in alle Ebenen senkrecht zur Längsrichtung weisenden Einbuchtungen und Ausstülpungen mittels einer Strukturierung des Kerndrahts in einer Ebene senkrecht zur Längsrichtung und einer Torsion des strukturierten Drahts (2) um die Längsachse des strukturierten Drahts (2) gebildet sind, so dass der so entstehende tordierte strukturierte Draht (2) die Form einer Helix aufweist.

3. Verfahren nach Anspruch 1, wobei die Strukturierung im Mittel über die Längsrichtung des Drahts in alle Ebenen senkrecht zur Längsrichtung mittels einer Strukturierung in einer ersten Ebene senkrecht zur Drahtlängsrichtung mit einer ersten Amplitude und einer ersten Wellenlänge und einer Strukturierung in einer zweiten Ebene senkrecht zur Drahtlängsrichtung, die senkrecht auf der ersten Ebene steht, mit einer zweiten Amplitude und einer zweiten Wellenlänge und einer Torsion des strukturierten Drahts (2) um seine Längsachse gebildet ist.

4. Verfahren nach einem der Ansprüche 1 bis 3, wobei der strukturierte Draht (2) spiralförmig so unter einer senkrecht zur Grundfläche seiner Einhüllenden wirkenden Spannung in den Rillen (9, 10) um die Drahtführungsrollen herumgeführt ist, dass zwischen zwei Drahtführungsrollen (14) ein ebenes Gatter aus parallel zueinander verlaufenden Abschnitten der Einhüllenden des Drahts entsteht.

5. Verfahren nach einem der Ansprüche 1 bis 4, wobei das Bewegen des Drahts in einer fortwährenden Abfolge von Paaren von Richtungsumkehrungen besteht und ein Paar aus Richtungsumkehrungen jeweils ein erstes Bewegen des Drahts in eine erste Richtung in Drahtlängsrichtung um eine erste Länge und ein nachfolgendes Bewegen des Drahts in eine zweite, der ersten Richtung genau entgegengesetzte Richtung um eine zweite Länge umfasst und wobei die erste Länge größer als die zweite Länge gewählt wird.

6. Verfahren nach einem der Ansprüche 1 bis 5, wobei der Durchmesser des Kerndrahts 130 µm bis 175 µm beträgt.

7. Verfahren nach einem der Ansprüche 1 bis 6, wobei der Durchmesser der Einhüllenden des strukturierten Drahts (2) dem 1,02- bis 1,25-fachen des Durchmessers des Kerndrahts entspricht.

8. Verfahren nach einem der Ansprüche 1 bis 7, wobei der kleinste Abstand jeder Rille (9, 10) zur Achse der Drahtführungsrolle (14) so gewählt wird, dass alle Punkte der Einhüllenden mit dem größten Abstand zur Achse der Drahtführungsrolle (14) in jeder Rille den gleichen Abstand zur Achse der Drahtführungsrolle (14) aufweisen.

9. Drahtsäge zum gleichzeitigen Abtrennen einer Vielzahl von Scheiben von einem Stab, enthaltend zwei Drahtführungsrollen (14) umfassend eine Vielzahl von Rillen (9,19), durch die strukturierter Sägedraht (2) geführt wird, wobei der strukturierte Draht (2), dessen Strukturierung in einer Vielzahl von Einbuchtungen und Ausstülpungen eines glatten Kerndrahts senkrecht zur Längsrichtung des Kerndrahts besteht, spiralförmig so unter einer senkrecht zur Grundfläche seiner Einhüllenden wirkenden Spannung in den Rillen (9,10) um die zwei Drahtführungsrollen (14) herumgeführt ist, dass zwischen den zwei Drahtführungsrollen (14) ein ebenes Drahtgatter aus parallel zueinander verlaufenden Abschnitten der Einhüllenden des Drahts entsteht, weiterhin umfassend eine Zustellvorrichtung, um den Stab senkrecht auf die Ebene des Drahtgatters zu und durch das Drahtgatter hindurch zu bewegen, wobei als Einhüllende derjenige gerade Kreiszylinder kleinsten Durchmessers verstanden wird, der den gesamten strukturierten Draht vollständig enthält, **dadurch gekennzeichnet, dass** jede Rille (9,10) jeweils einen gekrümmten Rillengrund (16) mit einem Krümmungsradius aufweist, der durch das 1-1,5 fache eines Radius der Einhüllenden des strukturierten Sägedrahts (2) in der jeweiligen Rille (9,10) gegeben ist.

## Claims

1. Method for simultaneously cutting a plurality of slices from a bar,
by moving the bar through a wire gate of structured saw wire (2) stretched by two wire guide rollers (14) rotating in the same direction,
while a slurry is fed to the wire creel,
wherein the structuring of the wire consists of a plurality of indentations and protrusions of a smooth core wire perpendicular to the longitudinal direction of the core wire,
wherein the structured saw wire (2) is guided through grooves (9, 10) of the two wire guide rollers (14),
**characterized in that** a bottom of each groove (16), on which the structured wire (2) rests, has
has a curved groove base (16) with a radius of curvature
which for each groove is equal to or up to 1.5 times larger than the radius of the envelope of the structured wire (2),
which the structured wire (2) has in the respective groove, wherein the envelope is understood to be that straight circular cylinder of smallest diameter which completely contains the entire structured wire.

2. The method according to claim 1, wherein the indentations and protrusions pointing on average over its longitudinal direction in all planes perpendicular to the longitudinal direction are formed by means of a structuring of the core wire in a plane perpendicular to the longitudinal direction and a torsion of the structured wire (2) about the longitudinal axis of the structured wire (2), so that the resulting twisted structured wire (2) has the shape of a helix.

3. The method of claim 1, wherein the structuring is formed on average over the longitudinal direction of the wire in all planes perpendicular to the longitudinal direction by means of structuring in a first plane perpendicular to the longitudinal direction of the wire with a first amplitude and a first wavelength and structuring in a second plane perpendicular to the longitudinal direction of the wire, which is perpendicular to the first plane, with a second amplitude and a second wavelength and torsion of the structured wire (2) about its longitudinal axis.

4. The method according to any one of claims 1 to 3, wherein the structured wire (2) is spirally guided around the wire guide rollers in the grooves (9, 10) under a tension acting perpendicularly to the base surface of its envelopes in such a way that a flat gate of sections of the envelopes of the wire extending parallel to one another is formed between two wire guide rollers (14).

5. The method of any one of claims 1 to 4, wherein moving the wire comprises a continuous sequence of pairs of direction reversals, and a pair of direction reversals each comprises a first moving the wire in a first direction in the longitudinal direction of the wire by a first length and a subsequent moving the wire in a second direction, exactly opposite to the first direction, by a second length, and wherein the first length is selected to be greater than the second length.

6. The method of any one of claims 1 to 5, wherein the diameter of the core wire is 130 µm to 175 µm.

7. The method of any one of claims 1 to 6, wherein the diameter of the envelope ends of the structured wire (2) is 1.02 to 1.25 times the diameter of the core wire.

8. The method according to any one of claims 1 to 7, wherein the smallest distance of each groove (9, 10) to the axis of the wire guide roller (14) is selected such that all points of the envelope ends with the largest distance to the axis of the wire guide roller (14) in each groove have the same distance to the axis of the wire guide roller (14).

9. Wire saw for simultaneously cutting off a plurality of slices from a bar, containing two wire guide rollers (14) comprising a plurality of grooves (9, 19) through which structured saw wire (2) is guided, wherein the structured wire (2), the structuring of which consists in a plurality of indentations and protrusions of a smooth core wire perpendicular to the longitudinal direction of the core wire, is guided spirally in the grooves (9,10) around the two wire guide rollers (14) in such a way that between the two wire guide rollers (14) a planar wire gate is formed from sections of the envelopes of the wire extending parallel to one another, further comprising a feed device for moving the rod perpendicularly towards the plane of the wire gate and through the wire gate, wherein the envelope is understood to be that straight circular cylinder of smallest diameter which completely contains the entire structured wire,
**characterized in that** each groove (9,10) has a respective curved groove bottom (16) with a radius of curvature given by 1-1.5 times a radius of the envelope of the structured saw wire (2) in the respective groove (9,10).

## Revendications

1. Procédé pour séparer simultanément une pluralité de tranches d'une barre,
en faisant passer la barre à travers une grille de fils métalliques structurés (2) tendue par deux rouleaux de guidage de fils (14) tournant dans le même sens, tandis qu'une bouillie est amenée à la grille de fils,
la structuration du fil consiste en une pluralité de creux et de bosses d'un fil d'âme lisse perpendiculairement à la direction longitudinale du fil d'âme,
le fil de sciage structuré (2) étant guidé à travers des rainures (9, 10) des deux rouleaux de guidage de fil (14),
**caractérisé en ce qu'**un fond de chaque rainure (16), sur lequel repose le fil structuré (2),
présente un fond de rainure (16) incurvé avec un rayon de courbure qui, pour chaque rainure, est égal ou jusqu'à 1,5 fois plus grand que le rayon des enveloppes du fil structuré (2),
que présente le fil structuré (2) dans la rainure respective, l'enveloppe étant entendue comme le cylindre circulaire droit de plus petit diamètre qui contient entièrement l'ensemble du fil structuré.

2. Procédé selon la revendication 1, dans lequel les creux et les protubérances orientés en moyenne sur sa direction longitudinale dans tous les plans perpendiculaires à la direction longitudinale sont formés au moyen d'une structuration du fil d'âme dans un plan perpendiculaire à la direction longitudinale et d'une torsion du fil structuré (2) autour de l'axe longitudinal du fil structuré (2), de sorte que le fil structuré tordu (2) ainsi obtenu présente la forme d'une hélice.

3. Procédé selon la revendication 1, dans lequel la structuration est formée en moyenne sur la direction longitudinale du fil dans tous les plans perpendiculaires à la direction longitudinale au moyen d'une structuration dans un premier plan perpendiculaire à la direction longitudinale du fil avec une première amplitude et une première longueur d'onde et d'une structuration dans un deuxième plan perpendiculaire à la direction longitudinale du fil, qui est perpendiculaire au premier plan, avec une deuxième amplitude et une deuxième longueur d'onde et une torsion du fil structuré (2) autour de son axe longitudinal.

4. Procédé selon l'une des revendications 1 à 3, dans lequel le fil structuré (2) est guidé en spirale autour des galets de guidage de fil sous une tension agissant perpendiculairement à la surface de base de ses enveloppes dans les rainures (9, 10) de telle sorte qu'il se forme entre deux galets de guidage de fil (14) une grille plane constituée de sections des enveloppes du fil s'étendant parallèlement entre elles.

5. Procédé selon l'une quelconque des revendications 1 à 4, dans lequel le déplacement du fil consiste en une succession continue de paires d'inversions de direction, une paire d'inversions de direction comprenant chacune un premier déplacement du fil dans une première direction dans la direction longitudinale du fil sur une première longueur et un déplacement ultérieur du fil dans une deuxième direction exactement opposée à la première direction sur une deuxième longueur, et dans lequel la première longueur est choisie supérieure à la deuxième longueur.

6. Procédé selon l'une quelconque des revendications 1 à 5, dans lequel le diamètre du fil d'âme est compris entre 130 µm et 175 µm.

7. Procédé selon l'une quelconque des revendications 1 à 6, dans lequel le diamètre des enveloppes du fil structuré (2) est égal à 1,02 à 1,25 fois le diamètre du fil d'âme.

8. Procédé selon l'une des revendications 1 à 7, dans lequel la plus petite distance de chaque rainure (9, 10) par rapport à l'axe du galet guide-fil (14) est choisie de manière à ce que tous les points des enveloppes les plus éloignées de l'axe du galet guide-fil (14) dans chaque rainure soient à la même distance de l'axe du galet guide-fil (14).

9. Scie à fil pour le tronçonnage simultané d'une pluralité de tranches d'une barre, contenant deux galets de guidage de fil (14) comprenant une pluralité de rainures (9, 19) à travers lesquelles est guidé un fil de scie structuré (2), le fil structuré (2), dont la structuration consiste en une pluralité de creux et de saillies d'un fil d'âme lisse perpendiculairement à la direction longitudinale du fil d'âme, étant guidé en spirale dans les rainures (9, 19) sous une tension agissant perpendiculairement à la surface de base de ses enveloppes, 10) autour des deux rouleaux de guidage de fil (14) de manière à former entre les deux rouleaux de guidage de fil (14) une grille de fil plane constituée de sections parallèles des enveloppes du fil, comprenant en outre un dispositif d'avance pour déplacer la barre perpendiculairement au plan de la grille de fil et à travers la grille de fil, l'enveloppe étant le cylindre circulaire droit de plus petit diamètre qui contient entièrement l'ensemble du fil structuré,
**caractérisé en ce que** chaque rainure (9, 10) présente respectivement un fond de rainure incurvé (16) avec un rayon de courbure qui est donné par 1-1,5 fois un rayon des enveloppes du fil de sciage structuré (2) dans la rainure respective (9, 10).
